# FASCICULE DE BREVET EUROPEEN

(11) **EP 3 155 591 B1**
(45) Date de publication et mention de la délivrance du brevet: **20.10.2021**
(21) Numéro de dépôt: 15728858.0
(22) Date de dépôt: 12.06.2015
(51) Int. Cl.: G06T 5/00

(54) **PROCEDE DE REDRESSEMENT D'IMAGE DE PNEUMATIQUES**
REIFENBILDGLEICHRICHTUNGSVERFAHREN
TIRE IMAGE RECTIFYING METHOD

(30) Priorité: 13.06.2014 FR 1455400
(43) Date de publication de la demande: 19.04.2017
(73) Titulaire: Compagnie Générale des Etablissements Michelin, 63000 Clermont-Ferrand (FR)
(72) Inventeur: JOLY, Alexandre, 63040 Clermont-Ferrand Cedex 9 (FR); ZANELLA, Jean-Paul, 63040 Clermont-Ferrand Cedex 9 (FR)
(74) Mandataire: Roussy, Delphine
(86) Numéro de dépôt international: PCT/EP2015/063222
(87) Numéro de publication internationale: WO 2015/189412

(56) Documents cités:
- FR-A1- 2 966 245
- JP-A- 2008 309 646
- US-A1- 2013 202 156
- RICHARD SZELISKI: "Image Alignment and Stitching: A Tutorial", INTERNET CITATION, 10 décembre 2006 (2006-12-10), pages 1-90, XP002680820, Extrait de l'Internet: URL:http://research.microsoft.com/pubs/700 92/tr-2004-92.pdf [extrait le 2012-07-25]
- None

## Description

### DOMAINE DE L'INVENTION

L'invention concerne le domaine de la fabrication des pneumatiques, et plus particulièrement le domaine du contrôle visuel de ces derniers en cours ou en fin de processus de production.

L'inspection visuelle des pneumatiques est largement développée dans l'industrie du pneumatique et fait encore le plus souvent appel à la dextérité des opérateurs chargés de détecter les éventuelles imperfections visibles à la surface du pneumatique. Or, avec l'avancée de la puissance de traitement des moyens informatiques, les manufacturiers entrevoient dés à présent la possibilité de rendre ces taches de contrôle automatique

A cet effet, différents moyens d'éclairage et d'imagerie numérique sont donc utilisés pour acquérir des images des pneumatiques, en vue d'un traitement numérique ultérieur permettant des détecter les imperfections auparavant détectées visuellement par les opérateurs.

Ces moyens d'imagerie permettent d'effectuer différentes prises d'images, que ce soit en deux dimensions ou en trois dimensions, de la surface intérieure et/ou extérieure du pneumatique à inspecter.

Afin d'inspecter l'ensemble de cette surface, des moyens mécaniques permettant de mettre le pneumatique en rotation par rapport aux dispositifs de prise d'image sont prévus. Par exemple ; on connaît des moyens tels qu'un plateau sur lequel est disposé le pneumatique, sur un flanc. Le plateau est mis en rotation pour permettre l'acquisition, par exemple, d'une image de la partie bourrelet du pneumatique à inspecter. On connaît également un système de guidage du pneumatique consistant en des roulettes mises en rotation.

Or, on a constaté que, lors de ces prises d'images, des imperfections non présentes sur le pneumatique apparaissent sur l'image acquise, risquant ainsi de fausser la détection, puisqu'il y a un risque de confusion entre les déformations intrinsèques aux pneumatiques, et les déformations induites lors de l'acquisition de l'image.

On a identifié plusieurs origines pouvant causer ces imperfections. D'une part le système mécanique d'entraînement en rotation du pneumatique peut entraîner un mouvement de rotation imparfait, provoquant ainsi un décalage du pneumatique par rapport au système d'acquisition. D'autre part, un pneumatique n'est pas un objet rigide, notamment lorsqu'il n'est pas gonflé, et des imperfections de courbure peuvent donc apparaître lors de l'acquisition.

On a envisagé la possibilité d'améliorer les caractéristiques mécaniques des machines utilisées pour le guidage en rotation des pneumatiques, mais de telles améliorations sont très coûteuses, et en permettent en outre pas de corriger les imperfections provenant des mouvements de l'enveloppe non gonflée.

La présente invention vise donc à proposer une méthode permettant de corriger l'ensemble des imperfections précitées, induites par l'acquisition.

### BREVE DESCRIPTION DE L'INVENTION

A cet effet, la présente invention propose une méthode de redressement de l'image d'un pneumatique immédiatement après acquisition, et avant que d'autres traitements numériques de détection soit appliqués.

Ainsi, l'invention concerne un procédé de redressement d'une image représentant la surface d'un pneumatique, comprenant les étapes suivantes :
- on détecte, sur l'image, un marquage circonférentiel présent sur le pneumatique,
- on détermine, à partir de ce marquage et pour chaque ligne de l'image, une référence de position sur le pneumatique,
- on détermine, pour chaque ligne de l'image, l'écart entre la position de référence sur la ligne courante et la valeur minimum des positions de référence pour l'ensemble des lignes de l'image, et
- on décale radialement les pixels de chacune des lignes de la valeur de cet écart.

Ce procédé de redressement peut avantageusement être utilisé pour le redressement d'une image acquise sur la partie bourrelet d'une enveloppe pneumatique. Il peut toutefois être mis en œuvre pour toute partie du flanc d'une enveloppe pneumatique, dès lors qu'elle possède un marquage circonférentiel.

En effet, dans un mode de réalisation, il est utile que le marquage circonférentiel est un élément présent sur l'ensemble de la circonférence du pneumatique, et centré par rapport à l'axe de rotation d'un dispositif utilisé pour le maintien et la rotation du pneumatique pendant l'acquisition de l'image à redresser.

Bien que l'invention ne soit pas limitée au traitement des images acquises sur le flanc des enveloppes, elle y trouve une application particulièrement intéressante, puisque ce sont ces images qui présentent généralement les défauts énoncés en préambule de la présente demande.

Dans un mode de réalisation, le marquage circonférentiel présente des propriétés géométriques particulières comprises dans le groupe comprenant : une bosse, un creux, une largeur, une profondeur, une teinte.

Dans un mode de réalisation avantageux, l'étape de détection comprend une étape de filtrage mettant en œuvre un filtre de contour. On choisira préférentiellement un filtre de Sobel, mais on pourrait tout aussi bien utiliser d'autres filtres de contour, tel qu'un filtre de Prewitt ou un filtre de Freeman. Ces filtres sont connus de l'homme du métier, et leur utilisation dans la présente invention sera ultérieurement détaillée.

Dans un mode de réalisation, l'étape de détection comprend en outre un ou plusieurs étapes parmi les suivantes : une étape de vérification de cohérence, une étape de lissage des données, et une étape d'interpolation.

En effet, il est possible que l'image sur laquelle on applique le procédé présente des défauts créés lors de l'acquisition. Ainsi, il est utile d'effectuer une vérification de cohérence entre les différentes lignes de l'image, pour vérifier la continuité de l'image. Il est également utile de prévoir une étape de lissage dans le cas où des valeurs aberrantes seraient présentes dans l'image. Il est également utile de prévoir une étape d'interpolation pour créer des données dans le cas où des trous seraient repérés sur l'image.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :
- la figure 1 représente une image destinée à être redressée par l'utilisation d'un procédé conforme à l'invention,
- la figure 2 représente l'image de la figure 1 après redressement par un procédé conforme à l'invention, et mise à plat.

### DESCRIPTION DU MEILLEUR MODE DE REALISATION DE L'INVENTION

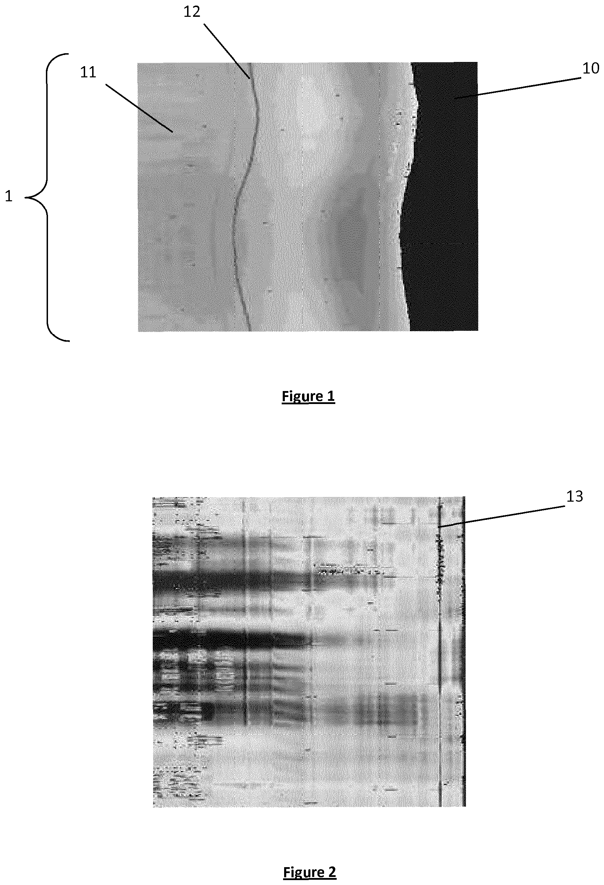

La figure 1 montre une image 1 acquise sur la partie bourrelet d'une enveloppe pneumatique. La zone 10 représente l'arrière-plan, et la zone 11 représente le bourrelet en lui-même. Cette image a été acquise en trois dimensions, mais un procédé selon l'invention peut tout aussi bien s'appliquer à une image acquise en deux dimensions.

On voit apparaître sur cette image un élément longitudinal 12, représente un élément de marquage présent sur le bourrelet représenté sur cette image. Un procédé selon l'invention peut être appliqué sur toute image présentant un tel marquage circonférentiel, que ce soit un cordon de centrage, une zone moleté ou tout autre élément.

Dans le cas présent, l'élément de marquage était un cordon de centrage d'épaisseur entre cinq et six dixième de millimètres, et de largeur entre sept et dix dixièmes de millimètres, formant donc un relief. On constate sur l'image que ce cordon de centrage est déformé. Cette déformation peut être induite par le système d'acquisition d'image, ou peut être intrinsèque au pneumatique.

La première étape d'un procédé selon l'invention consiste à détecter ce marquage circonférentiel sur l'image acquise. A cet effet, le marquage circonférentiel est traité comme un contour, et on va donc rechercher les contours de l'image qui ont une forme rectiligne orientée dans le sens circonférentiel et une orientation axiale.

La recherche des contours peut se conduire avantageusement à l'aide d'algorithmes de traitement de l'image numérique. Ces algorithmes sont fondés sur l'observation que les niveaux d'intensité de lumière ou de couleur varient de manière importante lorsque l'on passe d'un objet de l'image à un autre. On va donc rechercher les points de l'image autour desquels on passe rapidement du clair au sombre et qui correspondent le plus probablement a des contours, ainsi que l'orientation de ces contours.

En termes mathématiques, le gradient d'une fonction à deux variables (dans le cas présent l'intensité du niveau de gris ou de couleur en fonction des coordonnées de l'image) est un vecteur de dimension 2 dont les coordonnées sont les dérivées selon les directions axiales et circonférentielles. En chaque point ou pixel, le gradient pointe dans la direction du plus fort changement d'intensité, et sa longueur représente le taux de variation dans cette direction. Au niveau du contour, le gradient traverse le contour des intensités plus sombre vers les intensités les plus claires.

Parmi les algorithmes les plus courants on retiendra l'utilisation de filtres qui sont des opérateurs matriciels ayant pour objet de réaliser une convolution entre l'image considérée comme une matrice de valeurs numériques et un filtre ou un masque de convolution se présentant lui-même comme une matrice.

Bien que tous ces algorithmes puissent convenir, il apparait que l'algorithme de Sobel soit celui qui présente le plus d'avantages en raison de la relative légèreté de sa mise en œuvre et de sa capacité à s'affranchir d'un niveau de bruit important, ce qui est particulièrement intéressant dans le cas présent du fait du faible contraste de la trace formant la frontière entre deux éléments.

Le filtrage, par exemple avec un filtre de Sobel, permet de détecter des pics de valeur sur l'image, ces pics correspondant au marquage particulier. Avant de procéder au redressement, et comme précédemment mentionné, il est parfois utile de mettre en œuvre quelques étapes de correction sur l'image, tels qu'un traitement de cohérence, un lissage ou une interpolation.

Ainsi, pour vérifier la cohérence entre les lignes, on applique sur l'image un filtre morphologique de type dilatation avec un élément structurant de forme rectangulaire orienté dans le sens vertical, par exemple un élément structurant rectangulaire, préférentiellement de largeur 5 pixels et de hauteur 20 pixels. Ce filtre permet de lier les éléments alignés verticalement et de remplacer les valeurs manquantes de moins de 20 pixels de longueur, dans le cas où les objets sont alignés ou très proches verticalement, par exemple distants de moins de 5 pixels près.

Dans le cas où plusieurs objets ressortent de ce traitement, on effectue un filtrage des valeurs aberrantes, qui consiste à choisir l'objet celui qui est relié au début et à la fin de l'image et le premier par défaut.

Après ces étapes de correction, on détermine pour chaque ligne de l'image, une référence de position sur le pneumatique. Dans un exemple particulier, cette référence de position correspond, par exemple, à la distance entre la valeur minimale de l'élément de marquage sur une ligne et le bord gauche de l'image.

On détermine ensuite l'écart entre la position de référence sur la ligne courante et la valeur minimum des positions de référence pour l'ensemble des lignes de l'image. On choisit ici d'utiliser la valeur minimum pour plusieurs raisons. D'une part, cela permet d'avoir un écart toujours positif, et donc de simplifier la mise en œuvre de l'étape suivante. D'autre part, on a constaté que si on utilisait la valeur moyenne, par exemple, cette valeur pouvait être affectée par de gros défauts sur l'image, qui se répercuteraient donc sur le redressement de l'ensemble des lignes.

En outre, on a constaté qu'il était plus simple d'utiliser la valeur minimum plutôt que la valeur maximum, car un décalage en direction de la valeur maximum engendrerait une perte d'une partie de l'image, qui nécessiterait ultérieurement un redécoupage de l'image. Ceci complexifierait et ralentirait le traitement de l'image.

La dernière étape du procédé selon l'invention consiste alors à décaler radialement chacun des pixels de l'image de la valeur d'écart correspondant pour la ligne à laquelle appartient le pixel. On constate ainsi, sur la figure 2, qu'après la mise en œuvre d'un procédé conforme à l'invention, l'élément de marquage 13, qui était déformé sur la figure 1, est désormais redressé, et donc rectiligne.

La mise en œuvre d'un tel procédé permet ainsi de fournir une image de bonne qualité, sur laquelle d'autres traitements pourront être appliqués dans de bonnes conditions. Il sera ainsi possible de :
- découper l'image en plusieurs zones rectangulaires sur lesquels des traitements spécifiques pourront être réalisés ; ceci permet de simplifier les opérations de calcul et de réduire les durées de traitement,
- simplifier les opérations de recalage et de déformation pour comparer une image avec d'autres acquisitions,
- détecter des bavures de gomme ou des défauts spécifiques aux pneumatiques qui apparaissent sur la pointe de gomme.

Il est à noter que la présente invention s'avère particulièrement efficace si l'acquisition de l'image à redresser a été effectuée au préalable dans de bonnes conditions. Ainsi, on choisira de préférence une acquisition en trois dimensions, plus efficace pour détecter des marquages en relief.

Dans le cas d'une acquisition en deux dimensions, on veillera à utiliser un éclairage rasant, et qui tient compte de la courbure du flanc, pour détecter efficacement un marquage en relief. Pour un marquage longitudinal, on pourrait se limiter à un éclairage rasant orienté horizontalement. Pour un marquage en couleur, on utilisera un éclairage de la couleur du marquage, ce qui permet de le faire ressortir fortement lors d'une acquisition avec une caméra noir et blanc.

Par rapport à l'état de la technique, la présente invention est extrêmement avantageuse en ce qu'elle évite de devoir modifier la mécanique de la machine utilisée pour effectuer l'acquisition, puisqu'on corrige ultérieurement les défauts engendrés par cette machine.

## Revendications

1. Procédé de redressement d'une image (1) représentant la surface d'un pneumatique, comprenant les étapes suivantes :
• on détecte, sur l'image, un marquage circonférentiel (12) présent sur le pneumatique,
• on détermine, à partir de ce marquage et pour chaque ligne de l'image, une référence de position sur le pneumatique,
• on détermine, pour chaque ligne de l'image, l'écart entre la position de référence sur la ligne courante et la valeur minimum des positions de référence pour l'ensemble des lignes de l'image, et
• on décale radialement les pixels de chacune des lignes de la valeur de cet écart.

2. Procédé selon la revendication précédente, dans lequel le marquage circonférentiel (12) est un élément présent sur l'ensemble de la circonférence du pneumatique, et centré par rapport à l'axe de rotation d'un dispositif utilisé pour le maintien et la rotation du pneumatique pendant l'acquisition de l'image à redresser.

3. Procédé selon l'une des revendications précédentes, dans lequel les propriétés géométriques du marquage (12) sont comprises dans le groupe comprenant : une bosse, un creux, une largeur, une profondeur, une teinte.

4. Procédé selon l'une des revendications précédentes, dans lequel l'étape de détection comprend une étape de filtrage mettant en œuvre un filtre de contour.

5. Procédé selon l'une des revendications précédentes, dans lequel l'étape de détection comprend en outre une ou plusieurs étapes parmi les suivantes : une étape de vérification de cohérence, une étape de lissage des données, et une étape d'interpolation.

## Patentansprüche

1. Verfahren zur Rektifizierung eines die Fläche eines Luftreifens darstellenden Bilds (1), das die folgenden Schritte enthält:
• auf dem Bild wird eine auf dem Luftreifen vorhandene Umfangsmarkierung (12) erfasst,
• ausgehend von dieser Markierung und für jede Zeile des Bilds wird ein Positionsbezug auf dem Luftreifen bestimmt,
• für jede Zeile des Bilds wird die Abweichung zwischen der Bezugsposition auf der aktuellen Zeile und dem minimalen Wert der Bezugspositionen für die Gesamtheit der Zeilen des Bilds bestimmt, und
• die Pixel jeder der Zeilen werden um den Wert dieser Abweichung radial versetzt.

2. Verfahren nach dem vorhergehenden Anspruch, wobei die Umfangsmarkierung (12) ein über den gesamten Umfang des Luftreifens vorhandenes und bezüglich der Drehachse einer Vorrichtung zentriertes Element ist, die für den Halt und die Drehung des Luftreifens während der Erfassung des zu rektifizierenden Bilds verwendet wird.

3. Verfahren nach einem der vorhergehenden Ansprüche, wobei die geometrischen Eigenschaften der Markierung (12) in der Gruppe enthalten sind, die enthält: eine Wölbung, eine Vertiefung, eine Breite, eine Tiefe, eine Färbung.

4. Verfahren nach einem der vorhergehenden Ansprüche, wobei der Erfassungsschritt einen Filterungsschritt enthält, der einen Konturfilter anwendet.

5. Verfahren nach einem der vorhergehenden Ansprüche, wobei der Erfassungsschritt außerdem einen oder mehrere Schritte unter den folgenden enthält: einen Kohärenzüberprüfungsschritt, einen Datenglättungsschritt und einen Interpolationsschritt.

## Claims

1. Method of rectifying an image (1) representing the surface of a tyre, comprising the following steps:
• one detects, in the image, a circumferential marking (12) present on the tyre,
• one determines, on the basis of this marking and for each line of the image, a position reference on the tyre,
• one determines, for each line of the image, the difference between the reference position on the current line and the minimum value of the reference positions for all of the lines of the image, and
• the pixels of each of the lines are radially offset by the value of this difference.

2. Method according to the preceding claim, in which the circumferential marking (12) is an element present on the entire circumference of the tyre, and centred with regard to the axis of rotation of a device used to support and rotate the tyre during the acquisition of the image being rectified.

3. Method according to one of the preceding claims, in which the geometrical properties of the marking (12) fall within the group comprising: a bump, a cavity, a width, a depth, a hue.

4. Method according to one of the preceding claims, in which the detection step involves a filtering step which implements a contour filter.

5. Method according to one of the preceding claims, in which the detection step further involves one or more steps among the following: a step of verification of consistency, a data smoothing step, and an interpolation step.
